# EUROPEAN PATENT APPLICATION

(11) **EP 4 382 310 A1**
(43) Date of publication of application: **12.06.2024**
(21) Application number: 23207103.5
(22) Date of filing: 31.10.2023
(51) Int. Cl.: B44C 5/04, B41M 5/00, B41M 7/00, B44C 1/10, B44C 1/18, B44C 1/17

(54) **DIGITALLY PRINTED DECORATIVE SURFACE FABRICATION AND METHODS THEREOF**

(30) Priority: 07.12.2022 US 202218063009
(71) Applicant: The Boeing Company, Arlington, VA 22202 (US)
(72) Inventor: Drexler, Jason W., Arlington 22202 (US); Womack, II, Lloyd Layton, Arlington 22202 (US); Metting, Stephanie Iris, Arlington 22202 (US); Wilde, John Christopher, Arlington 22202 (US); Braaten, Nathan T., Arlington 22202 (US); Greene, Edward, Arlington 22202 (US); Larson-Smith, Kjersta, Arlington 22202 (US)
(74) Representative: Witte, Weller & Partner Patentanwälte mbB

(57) **Abstract**

A method for digitally printing a decorative surface material is disclosed, including providing a substrate (122) to a digital printer (308), printing a print material onto a top surface (120) of the print substrate (122), and curing the print material. The method also includes applying an adhesive (108, 116, 124) to a back surface (120) of the decorative print and applying the decorative print to an interior panel (102, 118, 126, 212, 216). The print material includes a visible or variable image, or a textured surface (120). The decorative surface material may provide a decorative interior panel (102, 118, 126, 212, 216) for an aerospace vehicle, such as a wall covering. The substrate (122) may include a flame barrier material, aluminum, or fiberglass.

## Description

### Technical Field

The present teachings relate generally to decorative surfaces or laminates and, more particularly, to digitally printed decorative laminates for use in aircraft interiors.

### Background

There are currently two recognized methods for covering walls in aircraft interiors including applying decorative laminates and painting the surface. Paint is typically applied via spray and for aircraft interiors, is usually applied as one color. The texture of paint is very limited and is generally only applied as a random texture. Decorative laminates can include complex imagery with texture. However, the fabrication of decorative laminates involves a complex multi-step process requiring equipment having significant capital investment. In addition, as manufactured today, it is very difficult to make decorative laminates with unique textures and can be difficult to align texture to printed imagery.

Current manufacturing processes include multi-step printing of films, such as screen printing and digital printing, lamination, and thermal embossing to produce such wall coverings. These wall coverings, used as airplane interiors and other interior vehicular applications, are generally limited to post-applied decorative laminates or paint. Additional limitations to these decorative panels include large landfill waste streams. This new process will reduce the manufacturing complexity and has the potential to reduce the volume of material sent to the landfill.

Therefore, it is desirable to fabricate decorative interior panels for aircraft or other vehicles utilizing a simplified process, providing desired texture and imagery, and reduced waste.

### Summary

The following presents a simplified summary in order to provide a basic understanding of some aspects of one or more embodiments of the present teachings. This summary is not an extensive overview, nor is it intended to identify key or critical elements of the present teachings, nor to delineate the scope of the disclosure. Rather, its primary purpose is merely to present one or more concepts in simplified form as a prelude to the detailed description presented later.

A method for digitally printing a decorative surface material is disclosed. The method also includes providing a substrate to a digital printer, printing a print material onto a top surface of the print substrate, and curing the print material. The method for digitally printing a decorative surface material also includes applying an adhesive to a back surface of the decorative print, and applying the decorative print to an interior panel. Implementations of the method for digitally printing a decorative surface material may include where the print material includes a visible image. The print material may include a textured surface. The decorative surface material may include a decorative interior panel for an aerospace vehicle. Curing the print material further may include exposing the print material to an ultraviolet radiation source. The adhesive may include a pressure sensitive adhesive. The decorative surface material may include a wall covering. The substrate may include a flame barrier material. The substrate may include aluminum. The substrate may include fiberglass.

Another method for digitally printing a decorative surface material is disclosed. The method includes providing a panel substrate, preparing the panel substrate to accept a print material, printing a print material onto a top surface of the panel substrate as prepared, and curing the print material. Implementations of the method for digitally printing a decorative surface material may include where the print material may include a visible image. The print material may include a textured surface. The decorative surface material may include a decorative internal panel for an aerospace vehicle. Curing the print material further may include exposing the print material to an ultraviolet radiation source. Preparing the panel substrate may include applying an adhesive to the top surface of the panel substrate. Preparing the panel substrate may include exposing the top surface of the panel substrate to an elevated temperature. The panel substrate may include a flame barrier material, aluminum, or fiberglass.

The features, functions, and advantages that have been discussed can be achieved independently in various implementations or can be combined in yet other implementations further details of which can be seen with reference to the following description.

### Brief Description of the Drawings

The accompanying drawings, which are incorporated in and constitute a part of this specification, illustrate embodiments of the present teachings and together with the description, serve to explain the principles of the disclosure. In the figures:
FIGS. 1A and 1B are schematics of an existing decorative laminate material and a decorative laminate panel of the present disclosure.
FIGS. 2A-2C are several views of applications of decorative laminate panels, in accordance with the present disclosure.
FIG. 3 is a schematic for a process to provide decorative laminate panels, in accordance with the present disclosure.
FIG. 4 is a schematic comparing an existing process to provide decorative laminate panels as compared to two alternate processes for providing a decorative laminate panel in accordance with the present disclosure.

It should be noted that some details of the figures have been simplified and are drawn to facilitate understanding of the present teachings rather than to maintain strict structural accuracy, detail, and scale.

### Detailed Description

Reference will now be made in detail to exemplary embodiments of the present teachings, examples of which are illustrated in the accompanying drawings. Wherever possible, the same reference numbers will be used throughout the drawings to refer to the same, similar, or like parts.

The production of interior wall coverings, decorative surfaces, or decorative laminate panels currently involves multi-step printing of films using techniques including screen printing and digital printing, lamination, and thermal embossing. These laminate panels are often restricted to post-applied decorative laminates or paint and are employed in interior applications for aircraft and other vehicles. Large landfill waste streams are one of these ornamental panels' additional restrictions. Methods described in the present teachings can provide a simplified manufacturing process and result in less waste being sent to landfills. By utilizing UV cure digital printing to build texture, the process for producing a wall covering or interior decorative panel becomes simplified by comparison.

The use of a commercially available machine to print a textured image either directly onto a panel or printing directly onto a substrate to be post-applied to a panel is a significant improvement in comparison to existing processes. The output of the process provides a decorative laminate or decorative surface with texture and imagery without the use of a complex manufacturing process. These printed, tactile decorative features and linings, for the purpose of branding and decoration inside commercial aircraft, can be fabricated using inkjet printing to print embossed, textured or raised printing on decorative laminate panels inside an aircraft or plane interior, include fewer steps for a less time-consuming process, resulting in less waste. Also, inkjet printing of livery on the interior of planes provides the ability to provide a special design and color scheme used on the vehicles, aircraft, or products associated with a particular company or branding scenario. Instead of conventional manufacturing techniques, the use of digital printing to manufacture decorative wall coverings or printing direct to panel provides simplicity and flexibility to the process of producing covering for walls in aircraft interiors while aligning texture to printed imagery. It should be noted that a completed decorative laminate or decorative surface as described herein may, in certain examples, refer to similar articles depending on the incorporated structure and process by which they are fabricated.

Commercially available printing systems, including but not limited to printing systems using ultraviolet (UV) curable inks can be utilized to print a textured image either directly onto a panel or printing directly onto a substrate to be post-applied to a panel. The output of the process would be similar to a decorative laminate with texture and imagery while avoiding complex manufacturing processes. Processes of the present disclosure can skip the step of manufacturing a tool and will directly manufacture parts as an alternative. Exemplary processes as described herein can include UV curable or radiation curable inks. Since the ink used to print the images can be flammable, the volume of ink jetted onto the substrate can also be controlled for use in the aircraft interior. In other examples, a flame barrier, such as but not limited to, aluminum foil, phenolic prepreg, a low heat release substrate such as an aluminum panel, acrylic-polyvinyl chloride thermoplastics, polyvinyl chloride thermoplastics, or combinations thereof, can reduce the heat release rate of the construction. Phenolic prepreg materials include fiberglass fabric that is saturated with phenolic resin and B-staged (a process for removing solvents) at low temperature to prolong the cure process. In this way, a solid material can be processed further as an alternative to using liquid resins.

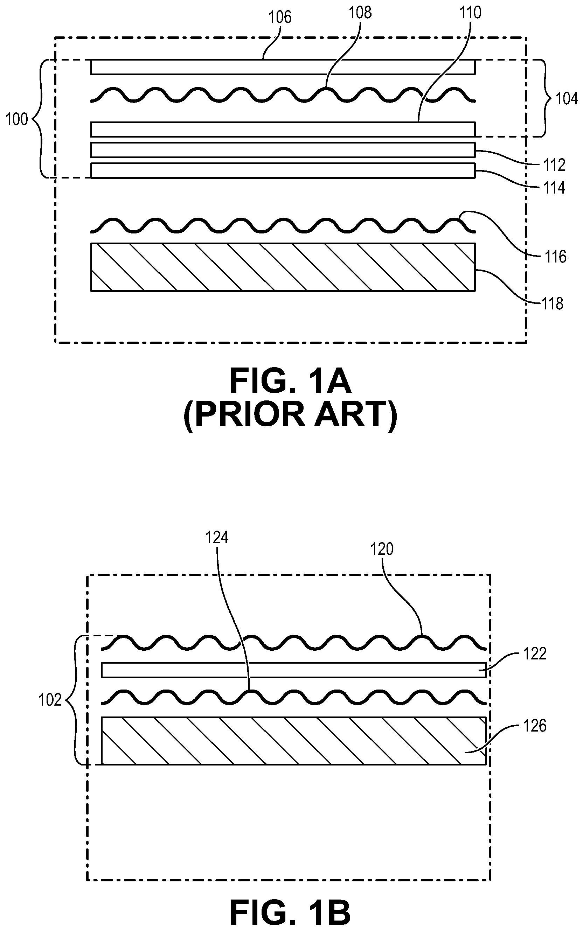

FIGS. 1A and 1B are schematics of an existing decorative laminate material and a decorative laminate panel of the present disclosure. FIG. 1A depicts a schematic of an existing decorative laminate material 100 having a top sheet 104 including several layers including a clear cap layer 106 for protecting a paint layer or image layer, an adhesive layer 108, and an image layer 110 The top sheet can be layered upon one or more additional layers, which can include an embossing resin layer 112 or a film layer 114 or foil layer which are then affixed to a substrate panel 118 with an adhesive 116. An embossing resin layer 112 can be a film material at room temperature that forms texture and cures to hold a texture. A film layer 114 may include additional material layers such as aluminum foil, polymer films such as poly vinyl fluoride (PVF), poly vinylidene fluoride (PVDF), poly vinyl chloride (PVC), and the like, fiberglass reinforced resin, coatings, flame retardants, or combinations thereof. The adhesive can be a pressure sensitive sheet adhesive, or a liquid applied adhesive. FIG. 1B shows a decorative surface or decorative laminate panel 102 of the present disclosure, which includes a printed surface 120 which can include a texture or an image onto a substrate 122, which can be a film or flexible laminate material. The preceding layers can be applied to a substrate panel 126 using an adhesive 124, which may be a pressure sensitive sheet adhesive, or a liquid applied adhesive. It should be noted that the structure as described in regard to FIG. 1B contains fewer layers and is considerably less complex than the structure as described in regard to FIG. 1A. In certain examples, the substrate 122 can be or include materials isuch as but not limited to polymer films such as PVF, PVDF, acrylic-polyvinyl chloride (such as Kydex^{™}), phenolic prepreg, fiberglass reinforced resin, carbon fiber reinforced resin, aluminum foil, fiber reinforced flame retardant epoxy, or combinations thereof. Additionally, decorative laminates using digitally printed textures can provide a facilitated meeting of the needs of a variety of customers, simplify manufacturing or fabrication, or generate less waste than previously fabricated decorative laminates.

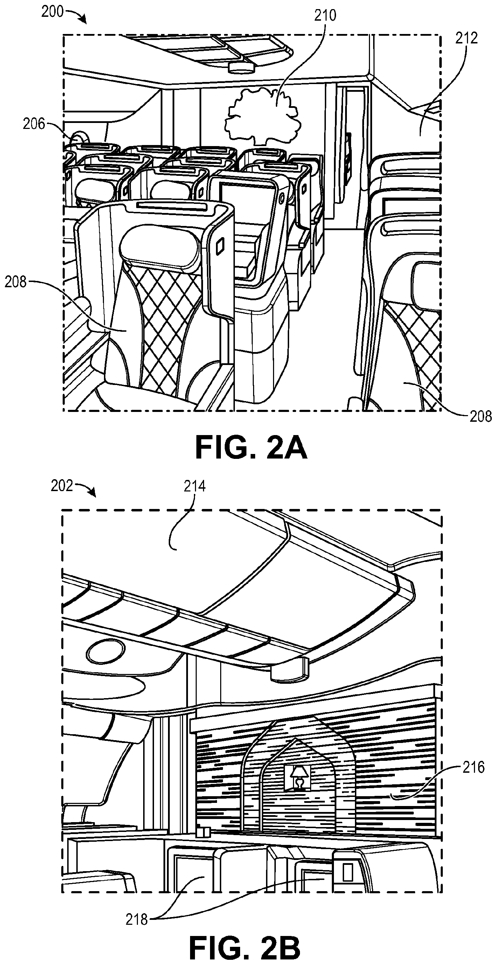

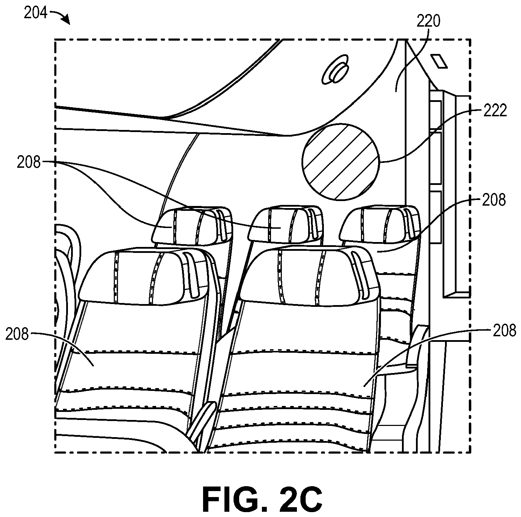

FIGS. 2A-2C are several views of applications of decorative laminate panels, in accordance with the present disclosure. A first interior view 200 of an aircraft in FIG. 2A, includes one or more window areas or openings 206, several seats 208, a first decorative laminate panel 210, a second decorative panel 212. While the first decorative laminate panel 210 and second decorative panel 212 are shown towards the back of a cabin section in the first interior view 200, portions of the seat 208, areas surrounding the window areas or openings 206 dividers between sections, or other areas of the interior of the aircraft may be covered with one or more decorative laminate panels as shown in the present disclosure. Fig. 2B depicts a second interior view 202 of an aircraft, including an overhead compartment area 214, a decorative laminate panel exhibiting several textured elements 216, several viewing screens 218. In certain examples, portions of the overhead compartment area 214 or structural features surrounding the viewing screens 218 may include one or more sections of decorative laminate panels 216 as shown and described herein. FIG. 2C depicts a third interior view 204 of an aircraft, including several seats 208 and a decorative laminate panel 220 on an interior wall of the aircraft defining a section partition. Further, the decorative laminate panel 220 includes a branding element 222 that can be customized during fabrication of the decorative laminate panel 220 or other portions of the aircraft interior as described herein. These decorative panels 210, 212, 216, 220, in certain examples, may include various imagery, such as welcome features, framed art, transverse surfaces, which include curved surfaces that do not intersect, décor panels, textured features, such as dynamic geometric surfaces, immersive natural elements, elevated wood grain simulations, varying grain directions, organic shapes, unique patterns, branding elements 222, such as logos or other branding features, or combinations thereof.

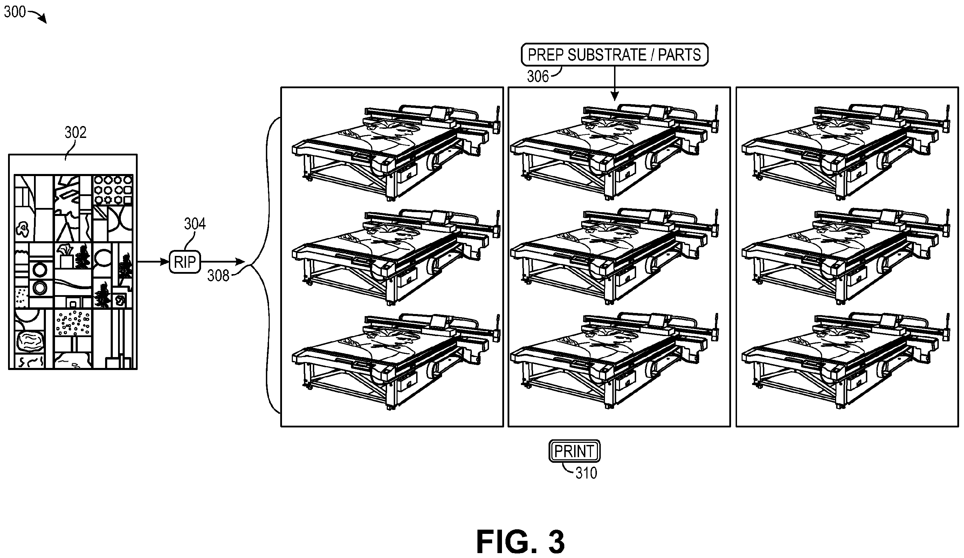

FIG. 3 is a schematic for a process to provide decorative laminate panels, in accordance with the present disclosure. While existing processes for printed decorative laminate include labor intensive processes, limited artwork capabilities without the capability to register texture to graphics, the process 300 to provide decorative laminate panels shown in FIG. 3 includes a step to design a graphic content for a decorative panel, convert graphics for printing with a raster image processor (RIP)304, and preparation of substrates or parts for printing 306. The prepared substrates can then be printed upon using one or more of an array of UV-LED inkjet printers 308 and the processed images are printed 310 upon the prepared substrates. This alternative to previous decorative laminate production provides custom textures aligned to custom graphics, durable surfaces, and a comparatively simplified process.

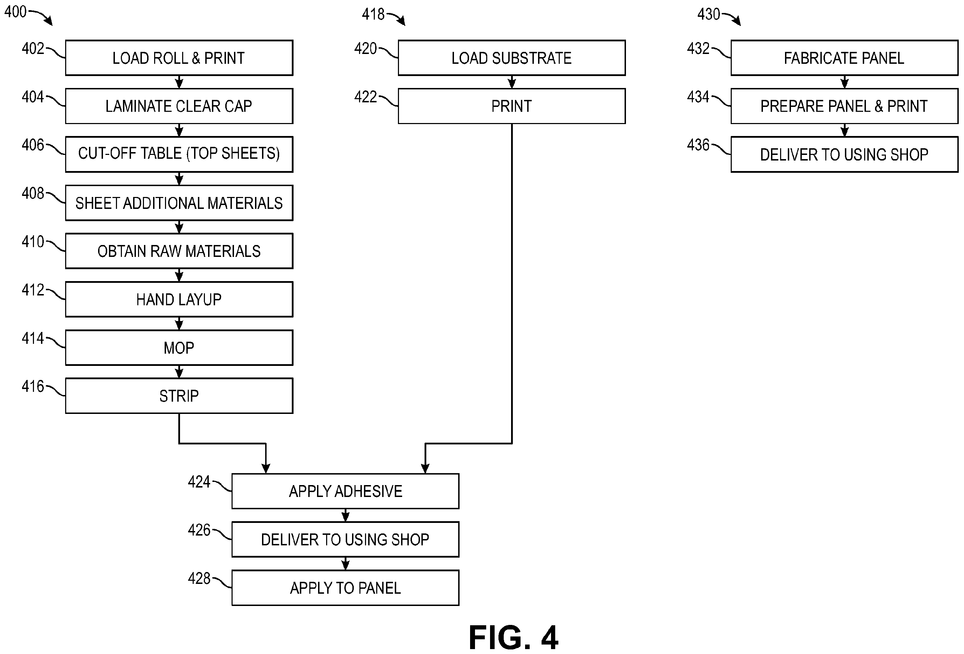

FIG. 4 is a schematic comparing an existing process to provide decorative laminate panels as compared to two processes for providing a decorative laminate panel in accordance with the present disclosure. A comparative existing process 400 for providing a decorative laminate panel is shown, which begins with loading a roll and printing onto the roll material 402 and laminating a clear cap 404 onto the roll material. The printing is typically a screen-printing process. The printed, capped material is worked on a cut-off table for top sheets 406, followed by the sheeting of additional materials 408, and providing any needed additional raw materials 410. Next, a manual hand layup 412 of the decorative laminate panel is completed, a heated multi-opening press (MOP) 414 is used to affix the image or printed portion to the decorative laminate panel, followed by stripping of the top sheets 416. Following this portion of the process 400, adhesive is applied to the top sheet 424, the material is delivered to a using shop 426, and applied to the panel 428. This comparative existing process 400 is a labor intensive, multi-step process.

A first alternative process 418 for producing a decorative surface material includes fewer steps, including to load a print substrate into a printing system 420 and print upon the substrate 422, followed by the common steps of applying adhesive to the construction 424, or to the back surface of a decorative print, delivering the material to a using shop 426, and applying the printed sheet to the panel 428. This first alternative method for digitally printing a decorative laminate material 418 includes providing a laminate panel substrate to a digital printer, printing texture and imagery onto a top surface of the laminate panel substrate, further includes curing the print material, applying an adhesive to a back surface of the laminate panel substrate, or to the decorative print, which can be, but is not limited to, a pressure sensitive adhesive or liquid applied adhesive, and applying the laminate panel substrate to a laminate panel. The print material can include a visible and/or variable image, a textured surface, or a combination thereof. The decorative laminate materials as described herein can be a decorative interior panel for an aerospace vehicle. Curing the print material can involve exposing the print material to an ultraviolet radiation source or being exposed to heat or an elevated temperature. The substrate material 420 can be or include a wall covering, or include a flame barrier material, which may be composed or partially composed of aluminum, fiberglass, and the like. A variable image includes an image that can be digitally prepared to provide changing or variable appearance to certain area of the resulting image.

A second alternative process 430 for producing a decorative surface material also includes fewer steps, including providing a decorative panel or fabricating a base panel 432, preparing the laminate panel substrate or print substrate to accept a print material and printing a textured print 434 onto a top surface of the laminate panel substrate 432, and curing the print material. This completed panel can then be delivered directly to a using shop 436, which also saves several steps as compared to the existing process 400. It should be noted that the second alternative process 430 does not include an application step, as the finished panel is completed after step 434. Again, the print material comprises a visible image, a textured surface, or a combination thereof. The decorative laminate materials as described herein can be a decorative interior panel or decorative internal panel for an aerospace vehicle. Curing the print material can involve exposing the print material to an ultraviolet radiation source or being exposed to heat or an elevated temperature. Portions of the decorative laminate material can be or include a wall covering, or include a flame barrier material, which may be composed or partially composed of aluminum, fiberglass, and the like. The digitally printed texture on the decorative laminate materials can be aligned with the artwork or images printed onto the top surfaces.

In the first alternative process 418 and the second alternative process 430, UV-curable inkjet ink printed surfaces can be incorporated into the airplane by roll-to roll or flatbed printing on thin films, or thin rigid substrates that can be adhesively bonded to a structural part, such as a lavatory wall or other interior surface, flatbed printing on rigid substrates that can be either adhesively bonded to a structural part, such as an interior surface like a lavatory wall or mechanically attached to a structural part, such as a class divider, or by direct-to-part printing, such as on a fiberglass extra-wide centerline partition panel, or on an outboard bulkhead panel with primed aluminum face sheet. The use of flat-bed, large sized, UV curable inkjet printers to build up layers of ink in an advanced manufacturing style process, provides a capability of aligning imagery with texture that can correspond to the printed image, and can be done concurrently in a single step. Processes and methods of the present disclosure further allow for selectivity in terms of inks that are acceptable for aerospace applications, as the utilized ink and substrate need to be compatible with flammability requirements. Adhesive bonding methods can include spraying adhesive with curing, or pressure-sensitive adhesive film such as tape-based material adhesives. Mechanical fastening can include the use of fasteners such as small screws or bolts to fasten rigid parts together, where the screws, bolts, or fasteners include recessed head design to be hidden under decorative trim, or behind other features that are attached to the panel to conceal the fasteners. Additionally, the decorative interior linings and features can be fabricated with comparatively higher print quality, greater color saturation, low to high-gloss surface quality within the same print area as compared to current methods. Also, custom surface textures up to a certain thickness of ink which satisfies fire safety regulations can be provided while having perfect agreement and/or registration of texture concepts combined with color or image concepts. For example, physical grooves in a printed wood panel can be produced having consistent color changes at those grooves, making the part look more like real wood. The processes as disclosed herein provide simplified manufacturing processes, as compared to existing multiple operations including, but not limited to, printing, laminating, sheeting, embossing, and separating stacks of parts. By printing directly onto a decorative panel, a white surface, such as a removable film can be used, the surface may be applied to any previously fabricated portion of a decorative laminate panel. In certain alternatives, the surface may be applied, used, and removed, reprinted and reapplied. This capability of repairing such decorative laminate panels is desirable as well, as high-quality surfaces can be peeled and repaired or reprinted.

Further advantages provided by the present teachings include a wide range of size availability by the described processes. Panels can be fabricated in small sizes from about 144 square inches to extra-wide panels where a splice in the decorative liner would normally be required. Exemplary examples include sizes of about 98 inches by 120 inches or about 80 inches by 120 inches, but may be larger in other examples. The fabrication processes described herein can be used to produce class dividers, walls of monuments such as closets or crew rests, lavatory walls, doors and backsplashes, and walls of first class and business class mini-suites. These panels can be provided with no odor, low brittleness, added flexibility to resist flaking off in service, while meeting design considerations, long term UV stability, and fire safety regulations. Other advantages include resistance to abrasion, scratches, scrapes and impacts, humidity, fungus, cleaning products and solvents, and staining from use and passenger contact. Additional Benefits of the present disclosure provides a simplified production process with less waste, expanded capabilities, and lower-cost capital equipment having facile customization and branding, and a significant reduction in tooling storage and costs.

While the present teachings have been illustrated with respect to one or more implementations, alterations and/or modifications may be made to the illustrated examples without departing from the spirit and scope of the appended claims. For example, it may be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or embodiments of the present teachings. It may be appreciated that structural objects and/or processing stages may be added, or existing structural objects and/or processing stages may be removed or modified. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of" is used to mean one or more of the listed items may be selected. Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed may be somewhat altered, as long as the alteration does not result in nonconformance of the process or structure to the illustrated embodiment. The terms "couple," "coupled," "connect," "connection," "connected," "in connection with," and "connecting" refer to "in direct connection with" or "in connection with via one or more intermediate elements or members." Finally, the terms "exemplary" or "illustrative" indicate the description is used as an example, rather than implying that it is an ideal. Other embodiments of the present teachings may be apparent to those skilled in the art from consideration of the specification and practice of the disclosure herein. It is intended that the specification and examples be considered as exemplary only, with a true scope and spirit of the present teachings being indicated by the following claims.

Further, the current disclosure comprises embodiments according to the following clauses:
Clause 1. A method for digitally printing a decorative surface material, comprising:
   providing a substrate to a digital printer;
   printing a print material onto a top surface of the print substrate;
   curing the print material;
   applying an adhesive to a back surface of the decorative print; and
   applying the decorative print to an interior panel.
Clause 2. The method for digitally printing a decorative surface material of clause 1, wherein the print material comprises a visible image.
Clause 3. The method for digitally printing a decorative surface material of clause 1 or 2, wherein the print material comprises a textured surface.
Clause 4. The method for digitally printing a decorative surface material of any of clauses 1 to 3, wherein the decorative surface material comprises a decorative interior panel for an aerospace vehicle.
Clause 5. The method for digitally printing a decorative surface material of any of clauses 1 to 4, wherein curing the print material further comprises exposing the print material to an ultraviolet radiation source.
Clause 6. The method for digitally printing a decorative surface material of any of clauses 1 to 5, wherein the adhesive comprises a pressure sensitive adhesive.
Clause 7. The method for digitally printing a decorative surface material of any of clauses 1 to 6, wherein the decorative surface material comprises a wall covering.
Clause 8. The method for digitally printing a decorative surface material of any of clauses 1 to 7, wherein the substrate comprises a flame barrier material.
Clause 9. The method for digitally printing a decorative surface material of any of clauses 1 to 8, wherein the substrate comprises aluminum.
Clause 10. The method for digitally printing a decorative surface material of any of clauses 1 to 9, wherein the substrate comprises fiberglass.
Clause 11. A method for digitally printing a decorative surface material, comprising:
   providing a panel substrate;
   preparing the panel substrate to accept a print material;
   printing a print material onto a top surface of the panel substrate as prepared; and
   curing the print material.
Clause 12. The method for digitally printing a decorative surface material of clause 11, wherein the print material comprises a visible image.
Clause 13. The method for digitally printing a decorative surface material of clause 11 or 12, wherein the print material comprises a textured surface.
Clause 14. The method for digitally printing a decorative surface material of any of clauses 11 to 13, wherein the decorative surface material comprises a decorative internal panel for an aerospace vehicle.
Clause 15. The method for digitally printing a decorative surface material of any of clauses 11 to 14, wherein curing the print material further comprises exposing the print material to an ultraviolet radiation source.
Clause 16. The method for digitally printing a decorative surface material of any of clauses 11 to 15, wherein preparing the panel substrate comprises applying an adhesive to the top surface of the panel substrate.
Clause 17. The method for digitally printing a decorative surface material of any of clauses 11 to 16, wherein preparing the panel substrate comprises exposing the top surface of the panel substrate to an elevated temperature.
Clause 18. The method for digitally printing a decorative surface material of any of clauses 11 to 17, wherein the panel substrate comprises a flame barrier material.
Clause 19. The method for digitally printing a decorative surface material of any of clauses 11 to 18, wherein the panel substrate comprises aluminum.
Clause 20. The method for digitally printing a decorative surface material of any of clauses 11 to 19, wherein the panel substrate comprises fiberglass.

## Claims

1. A method for digitally printing a decorative surface material, comprising:
providing a substrate (122) to a digital printer (308);
printing a print material onto a top surface (120) of the print substrate (122);
curing the print material;
applying an adhesive (108, 116, 124) to a back surface (120) of the decorative print; and
applying the decorative print to an interior panel (102, 118, 126, 212, 216).

2. The method for digitally printing a decorative surface material of claim 1, wherein the print material comprises a visible image and/or a textured surface (120).

3. The method for digitally printing a decorative surface material of claim 1 or 2, wherein the decorative surface (120) material comprises a decorative interior panel (102, 118, 126, 212, 216) for an aerospace vehicle.

4. The method for digitally printing a decorative surface material of any of claims 1 to 3, wherein curing the print material further comprises exposing the print material to an ultraviolet radiation source.

5. The method for digitally printing a decorative surface material of any of claims 1 to 4, wherein the adhesive (108, 116, 124) comprises a pressure sensitive adhesive (108, 116, 124).

6. The method for digitally printing a decorative surface material of any of claims 1 to 5, wherein the decorative surface (120) material comprises a wall covering.

7. The method for digitally printing a decorative surface material of any of claims 1 to 6, wherein the substrate (122) comprises a flame barrier material, aluminum and/or fiberglass.

8. A method for digitally printing a decorative surface material, comprising:
providing a panel (102, 118, 126, 212, 216) substrate (122);
preparing the panel (102, 118, 126, 212, 216) substrate (122) to accept a print material;
printing a print material onto a top surface (120) of the panel (102, 118, 126, 212, 216) substrate (122) as prepared; and
curing the print material.

9. The method for digitally printing a decorative surface material of claim 8, wherein the print material comprises a visible image.

10. The method for digitally printing a decorative surface material of claim 8 or 9, wherein the print material comprises a textured surface (120).

11. The method for digitally printing a decorative surface material of any of claims 8 to 10, wherein the decorative surface (120) material comprises a decorative internal panel (102, 118, 126, 212, 216) for an aerospace vehicle.

12. The method for digitally printing a decorative surface material of any of claims 8 to 11, wherein curing the print material further comprises exposing the print material to an ultraviolet radiation source.

13. The method for digitally printing a decorative surface material of any of claims 8 to 12, wherein preparing the panel (102, 118, 126, 212, 216) substrate (122) comprises applying an adhesive (108, 116, 124) to the top surface (120) of the panel (102, 118, 126, 212, 216) substrate (122).

14. The method for digitally printing a decorative surface material of any of claims 8 to 13, wherein preparing the panel (102, 118, 126, 212, 216) substrate (122) comprises exposing the top surface (120) of the panel (102, 118, 126, 212, 216) substrate (122) to an elevated temperature.

15. The method for digitally printing a decorative surface material of any of claims 8 to 14, wherein the panel (102, 118, 126, 212, 216) substrate (122) comprises a flame barrier material, aluminum and/or fiberglass.
